# EUROPÄISCHE PATENTSCHRIFT

(11) **EP 2 204 083 B1**
(45) Veröffentlichungstag und Bekanntmachung des Hinweises auf die Patenterteilung: **23.01.2013**
(21) Anmeldenummer: 10155070.5
(22) Anmeldetag: 18.08.2003
(51) Int. Cl.: A01F 29/14, A01D 41/127, A01D 43/08

(54) **Erntemaschine**
Harvesting machine
Machine de récolte

(30) Priorität: 30.09.2002 DE 10245885
(43) Veröffentlichungstag der Anmeldung: 07.07.2010
(62) Teilanmeldung aus: 03102572.9
(73) Patentinhaber: Deere & Company, Moline, IL 61265-8098 (US)
(72) Erfinder: Hofer, Juergen, 66501 Grossbundenbach (DE); Weber, Konrad, 66780 Rehlingen-Siersburg (DE)
(74) Vertreter: Holst, Sönke

(56) Entgegenhaltungen:
- WO-A-01/65919
- US-A- 5 901 535
- US-B1- 6 272 819
- US-B1- 6 318 056

## Beschreibung

Die Erfindung betrifft eine Erntemaschine mit einer Zuführeinrichtung, die betreibbar ist, einer Gutbearbeitungseinrichtung Erntegut zuzuführen, und mit einer Steuerung, die eingerichtet ist, basierend auf der erfassten Drehzahl der Gutbearbeitungseinrichtung bzw. Zuführeinrichtung eine Stellgröße zu erzeugen, die bei einer Änderung der erfassten Drehzahl bewirkt, dass die Differenz zwischen dem aktuellen Drehzahlverhältnis von Zuführeinrichtung und Gutbearbeitungseinrichtung und dem Solldrehzahlverhältnis zumindest verringert wird.

In der US 5 901 535 A wird ein Feldhäcksler eingangs genannter Art beschrieben, bei dem die Drehzahlen der Häckseltrommel und der Einzugswalzen durch Sensoren erfasst werden. Der Quotient der Drehzahlen, der ein Maß für die Schnittlänge des gehäckselten Gutes ist, wird mit einem vorgegebenen Sollwert verglichen. Im Falle einer Abweichung wird die Drehzahl der Einzugswalzen und/oder der Häckseltrommel derart variiert, dass die Differenz zwischen dem Soll- und dem Istdrehzahlverhältnis zumindest verringert wird. Dazu werden die Häckseltrommel und/oder die Einzugswalzen hydraulisch angetrieben. Die Geschwindigkeit dieser Elemente wird somit geregelt, was nachteilige Regelschwingungen mit sich bringen kann. Außerdem ist ein Sensor für die Geschwindigkeit der Einzugswalzen erforderlich, der an einer Stelle anzuordnen ist, an der er dem Einfluss von Vibrationen und Pflanzensäften ausgesetzt ist. Er weist somit eine relativ geringe Lebensdauer auf, falls nicht auf sehr preisaufwändige Ausführungsformen zurückgegriffen wird.

Das der Erfindung zu Grunde liegende Problem wird darin gesehen, eine andere Möglichkeit aufzuzeigen, die Schnittlänge bei einem Feldhäcksler konstant zu halten.

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird vorgeschlagen, dass die Steuerung das Drehzahlverhältnis von zwei zur Drehzahlerfassung eingerichteten Sensoren lernen kann, z. B. bei der ersten Betriebsaufnahme der Erntemaschine oder in regelmäßigen Abständen, und abspeichern. Fällt einer der Sensoren aus, kann die Steuerung auf den anderen Sensor zurückgreifen. Eine derartige Anordnung kann bei Sensoren Verwendung finden, die zur Erfassung der Drehzahl der Gutbearbeitungseinrichtung oder der Zuführeinrichtung eingerichtet sind und eine Stellgröße basierend auf den Signalen dieser Sensoren erzeugen.

Die Erfindung eignet sich insbesondere dazu, bei Feldhäckslern eine konstante Schnittlänge zu erzielen. Sie kann aber auch bei Ballenpressen mit Schneideinrichtungen verwendet werden oder bei Mähdreschern gewährleisten, dass das Erntegut in konstanten Abständen mit Dreschelementen einer Dreschtrommel in Berührung kommt.

Weiterhin wird vorgeschlagen, dass die Steuerung eine Stellgröße für die Zuführeinrichtung erzeugt, die nicht auf einer gemessenen Drehzahl bzw. Fördergeschwindigkeit der Zuführeinrichtung basiert. Es wird somit eine "open-loop"-Schleife verwendet, für die kein Sensor zur Erfassung der Drehzahl der Zuführeinrichtung erforderlich ist. Die Geschwindigkeit der Zuführeinrichtung wird selbsttätig an eine geänderte Geschwindigkeit der Gutbearbeitungseinrichtung angepasst. Alternativ wird die Drehzahl der Gutbearbeitungseinrichtung unabhängig von einer Messung ihrer Drehzahl gesteuert.

Auf diese Weise erübrigt sich ein Sensor zur Erfassung der Drehzahl der Zuführeinrichtung oder Gutbearbeitungseinrichtung, der an einer Stelle anzuordnen ist, an der er Vibrationen und Einflüssen von Pflanzensäften ausgesetzt wäre. Bei der erfindungsgemäßen Erntemaschine sind keine Regelschwingungen zu erwarten, da auf eine Rückkopplung verzichtet wird.

Der Steuerung werden Informationen bezüglich der Drehzahl der Gutbearbeitungseinrichtung und des Sollwertes des Verhältnisses zwischen der Drehzahl bzw. Fördergeschwindigkeit der Zuführeinrichtung und der Drehzahl der Gutbearbeitungseinrichtung zugeführt. Das genannte Verhältnis enthält im Falle einer häckselnden Gutbearbeitungseinrichtung eine Information über die Schnittlänge. Anhand der beiden genannten Informationen bzw. Signale bestimmt die Steuerung die Stellgröße, die der Zuführeinrichtung zugeführt wird. Dabei kann eine Tabelle oder Liste oder ein Algorithmus (d. h. Gleichungen, anhand derer die Stellgröße berechnet wird) verwendet werden, um aus den zwei Informationen die Stellgröße abzuleiten. Es wäre im Übrigen auch denkbar, die Geschwindigkeit der Zuführeinrichtung zu erfassen und basierend auf ihr und dem Solldrehzahlverhältnis unabhängig von der Drehzahl der Gutbearbeitungseinrichtung eine Stellgröße zu erzeugen, die eine Anpassung der Drehzahl der Gutbearbeitungseinrichtung bewirkt.

Bei verschiedenen Ausführungsformen wird die Antriebsleistung der Zuführeinrichtung oder der Gutbearbeitungseinrichtung vollständig oder teilweise von einem hydrostatischen Antriebsmotor bereitgestellt, der eine verstellbare Ausgangsdrehzahl ermöglicht. Ein derartiger Antriebsmotor wird in der Regel durch eine Pumpe mit unter Druck stehendem Hydraulikfluid versorgt. Die Drehzahl, mit der die Pumpe angetrieben wird, beeinflusst in einem gewissen Maß die Drehzahl des Antriebsmotors. Es bietet sich daher an, der Steuerung eine Information hinsichtlich der Drehzahl zuzuführen, mit der die Pumpe angetrieben wird. Die Steuerung legt die Stellgröße für die Zuführeinrichtung oder Gutbearbeitungseinrichtung anhand dieser Information fest, so dass der Einfluss der Antriebsdrehzahl der Pumpe berücksichtigt wird.

Im Konkreten kann der Antriebsmotor die Zuführeinrichtung oder Gutbearbeitungseinrichtung direkt oder über ein dazwischen geschaltetes Getriebe mit festem oder umschaltbarem Übersetzungsverhältnis antreiben, über das der Steuerung eine Information vorliegt bzw. das im Falle eines schaltbaren Getriebes über einen mit der Steuerung verbundenen Sensor zur Erfassung der Schaltstellung und/oder des Übersetzungsverhältnisses des Getriebes erfasst wird. Bei anderen Ausführungsformen treibt der Antriebsmotor ein Element eines Planetengetriebes an. Ein anderes Element des Planetengetriebes wird mechanisch vom Verbrennungsmotor der Erntemaschine her angetrieben. Am dritten Element des Planetengetriebes steht dann eine durch den Antriebsmotor variierbare Drehzahl für die Zuführeinrichtung oder Gutbearbeitungseinrichtung zur Verfügung.

Die Drehzahl der Pumpe kann im Einzelnen durch einen Verbrennungsmotordrehzahlsensor erfasst werden. Letzterer erfasst die Drehzahl eines die Pumpe antreibenden Verbrennungsmotors, die mit der Drehzahl der Pumpe im festen, bekannten Verhältnis steht.

Die Steuerung benötigt eine Information über die Drehzahl der Gutbearbeitungseinrichtung oder der Zuführeinrichtung. Diese kann durch einen Sensor ermittelt werden, der direkt mit der Gutbearbeitungseinrichtung oder der Zuführeinrichtung oder ihrer Antriebswelle zusammenwirkt. Denkbar ist auch, dass der Sensor die Drehzahl eines Elements erfasst, das von der Gutbearbeitungseinrichtung oder der Zuführeinrichtung angetrieben wird bzw. diese antreibt, wie beispielsweise ein Verbrennungsmotor.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung und
- Fig. 2: ein Schema des Antriebs der Häckseltrommel und der Einzugswalzen der Erntemaschine aus Figur 1.

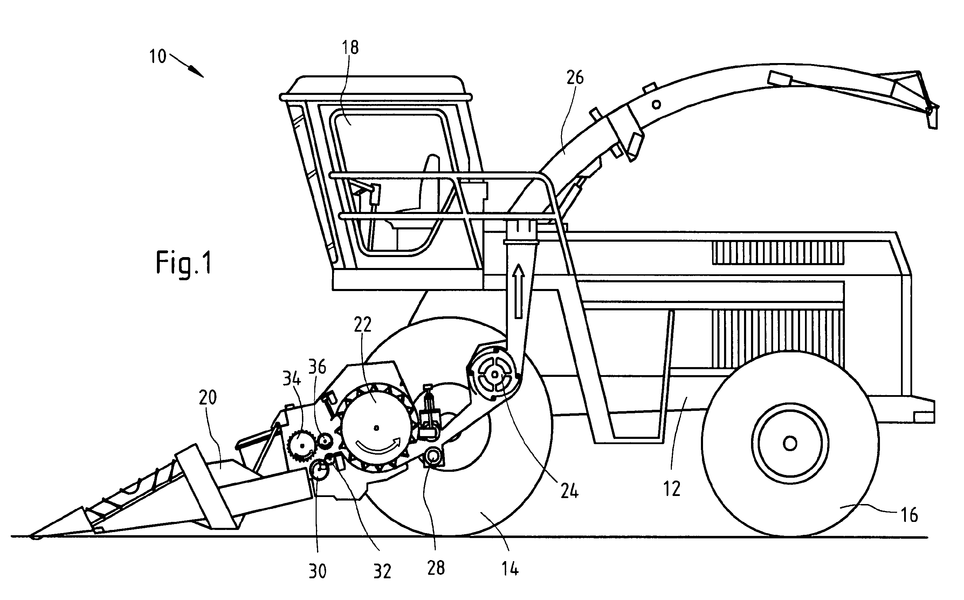

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen, wird durch vier Einzugswalzen 30, 32, 34, 36 einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 ist eine Nachzerkleinerungsvorrichtung mit zwei zusammenwirkenden Walzen 28 angeordnet, durch die das geförderte Gut der Fördervorrichtung 24 tangential zugeführt wird.

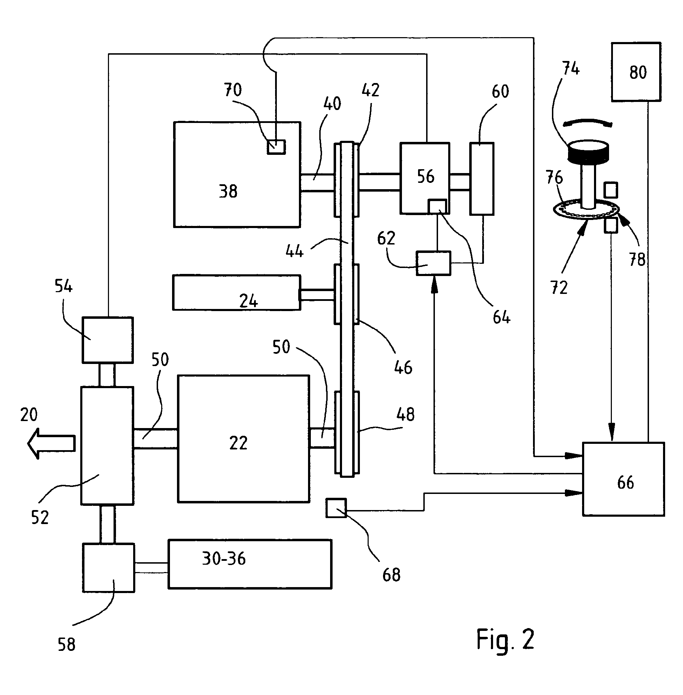

In der Figur 2 ist schematisch der Aufbau der Antriebseinrichtungen der Erntemaschine 10 aus Figur 1 dargestellt. Ein Verbrennungsmotor 38, in der Regel ein Dieselmotor, stellt die Antriebsleistung für den Vortrieb und die Gutbearbeitungs- und - förderelemente der Erntemaschine 10 bereit. Seine Ausgangswelle 40 treibt über eine Riemenscheibe 42 einen Treibriemen 44 an, der über eine Riemenscheibe 46 die Fördervorrichtung 24 und eine weitere Riemenscheibe 48 die Häckseltrommel 22 antreibt. Die Welle 50 der Häckseltrommel 22 ist außerdem mit einem Schnittlängengetriebe 52 verbunden. Das Schnittlängengetriebe 52 enthält ein Planetengetriebe (nicht eingezeichnet), dessen Ringrad mit der Welle 50 gekoppelt ist. Das Sonnenrad wird durch einen hydrostatischen Antriebsmotor 54 angetrieben, der von einer hydrostatischen Pumpe 56 mit unter Druck stehendem Hydraulikfluid versorgt wird. Die Pumpe 56 wird durch die Ausgangswelle 40 des Verbrennungsmotors 38 angetrieben. Der Planetenradträger des Planetengetriebes steht wiederum über ein Getriebe 58 mit den Einzugswalzen 30 - 36 in Antriebsverbindung. Die Erntegutaufnahmevorrichtung 20 wird ebenfalls durch das Schnittlängengetriebe 52 angetrieben. Der Aufbau und die Funktion des Schnittlängengetriebes 52 sind aus der WO 99/48353 A und der DE 102 07 467 A bekannt, deren Offenbarungen durch Verweis mit in die vorliegende Anmeldung aufgenommen werden.

Das Schnittlängengetriebe 52 ermöglicht beim Erntebetrieb durch Variation der Drehzahl des hydrostatischen Antriebsmotors 54, die Drehzahl der Einzugswalzen 30 - 36 und damit die Schnittlänge des gehäckselten Gutes auf einen gewünschten Wert einzustellen. Dabei stellt der mechanische Antrieb über die Welle 50 den größeren Teil der Antriebsleistung bereit, während der in beiden Richtungen antreibbare hydrostatische Antriebsmotor 54 eine Variation der Schnittlänge ermöglicht. Beim Erntebetrieb wird die Antriebsleistung für die Erntegutaufnahmevorrichtung 20 nur durch die Welle 50 bereitgestellt. Um die Erntegutaufnahmevorrichtung 20 und die Einzugswalzen 30 - 36 im Falle eines Gutstaus reversieren zu können, wird in einem Reversiermodus die Antriebsverbindung zwischen der Häckseltrommel 22 und der Ausgangswelle 40 des Verbrennungsmotors 38 durch eine (nicht eingezeichnete) Kupplung aufgetrennt und die Antriebsleistung des hydrostatischen Antriebsmotors 54 durch das Planetengetriebe hindurchgeleitet, um die Einzugswalzen 30 - 36 und die Erntegutaufnahmevorrichtung 20 in gegenüber dem Erntebetrieb umgekehrter Drehrichtung anzutreiben.

Die Ausgangswelle 40 des Verbrennungsmotors 38 treibt weiterhin eine hydrostatische Versorgungspumpe 60 an, die über einen elektromagnetischen Ventilzusammenbau 62, der Proportionalventile enthält, mit einem Hydromotor oder -zylinder 64 verbunden ist, der zur Verstellung einer Taumelscheibe der hydrostatischen Pumpe 56 eingerichtet ist. Alternativ oder zusätzlich könnte der hydrostatische Antriebsmotor 54 mit einer motorisch verstellbaren Taumelscheibe ausgestattet sein, die von der Steuerung 66 verstellt wird. Der elektromagnetische Ventilzusammenbau 62 ermöglicht entsprechend ihm zugeführter elektrischer Signale eine Variation der Drehzahl des hydrostatischen Antriebsmotors 54. Die Versorgungspumpe 60 oder eine andere hydrostatische Pumpe stellt weiterhin den Betriebsdruck für hydrostatische Radantriebe bereit.

Der elektromagnetische Ventilzusammenbau 62 ist mit einer Steuerung 66 verbunden, die weiterhin mit einem Häckseltrommeldrehzahlsensor 68 und einem Verbrennungsmotordrehzahlsensor 70 gekoppelt ist. Der Häckseltrommeldrehzahlsensor 68 erfasst die Drehzahl der Häckseltrommel 22 beispielsweise optisch mittels einer mit der Häckseltrommel 22 rotierenden Lochscheibe oder elektromagnetisch z. B. mittels eines Reedrelais, das mit einem oder mehreren an der Häckseltrommel 22 angebrachten Magneten zusammenwirkt. Der Verbrennungsmotordrehzahlsensor 70 kann mit einer elektronischen Motorsteuerung des Verbrennungsmotors 38 gekoppelt sein. Alternativ erfasst er die Drehzahl des Verbrennungsmotors 38 an der Ausgangswelle 40 in einer der Arten, wie sie bezüglich des Häckseltrommeldrehzahlsensors 68 beschrieben wurden. Weiterhin ist die Steuerung 66 mit einer Schnittlängeneingabeeinrichtung 72 verbunden. Die Schnittlängeneingabeeinrichtung 72 befindet sich in der Fahrerkabine 18 und umfasst einen Drehknopf 74, der mit einer Kodierscheibe 76 mit Löchern verbunden ist. Eine Lichtschranke 78 erfasst die Drehrichtung und Drehgeschwindigkeit der Kodierscheibe 76. Die Schnittlängeneingabeeinrichtung 72 ermöglicht es dem Bediener, der Steuerung 66 eine Information bezüglich der gewünschten Schnittlänge zuzuführen. Anstelle des Drehknopfs 74 und der Kodierscheibe 76 könnte als Schnittlängeneingabeeinrichtung 72 auch ein Potentiometer oder eine Tastatur verwendet werden. Die eingestellte Schnittlänge wird dem Bediener mittels einer mit der Steuerung 66 verbundenen Anzeigeeinrichtung 80 angezeigt. Es wäre auch denkbar, den Sollwert der Schnittlänge automatisch zu bestimmen, z. B. durch Sensoren, die Eigenschaften des Ernteguts erfassen. Dadurch kann die Schnittlänge selbsttätig auf einen Wert eingestellt werden, bei dem das Gut optimal verdaut werden kann. Die Steuerung 66 ist vorzugsweise durch eine Busleitung mit der Schnittlängeneingabeeinrichtung 72, der Anzeigeeinrichtung 80, dem elektromagnetischen Ventilzusammenbau 62 sowie dem Häckseltrommeldrehzahlsensor 68 und dem Verbrennungsmotordrehzahlsensor 70 verbunden.

Die Steuerung 66 erhält laufend Drehzahlinformationen vom Häckseltrommeldrehzahlsensor 68 und vom Verbrennungsmotordrehzahlsensor 70. Außerdem erhält sie eine Information über die gewünschte Schnittlänge von der Schnittlängeneingabeeinrichtung 72. Die zum Erzielen der gewünschten Schnittlänge erforderliche Drehzahl des hydrostatischen Antriebsmotors 54 und somit die Signale, die dem elektromagnetischen Ventilzusammenbau 62 zuzuführen sind, hängen von der Drehzahl der Häckseltrommel 22 und der Zahl der um den Umfang der Häckseltrommel 22 angeordneten Messer ab, die definieren, in welchen zeitlichen Abständen das Gut geschnitten wird. Außerdem definiert die Häckseltrommeldrehzahl eine Eingangsdrehzahl des Planetengetriebes im Schnittlängengetriebe 52. Die Drehzahl des hydrostatischen Antriebsmotors 54 hängt außerdem von der Drehzahl der Pumpe 56 ab, die durch die Drehzahl des Verbrennungsmotors 38 vorgegeben wird. Dabei ist generell die Drehzahl des Antriebsmotors 54 umso größer, je schneller die Pumpe 56 angetrieben wird. Die Steuerung 66 stellt dem elektromagnetischen Ventilzusammenbau somit Signale bereit, die anhand der Drehzahl der Häckseltrommel 22 (gemessen mit dem Häckseltrommeldrehzahlsensor 68), der Drehzahl des Verbrennungsmotors 38 (gemessen mit dem Verbrennungsmotordrehzahlsensor 70) und dem Schnittlängensollwert (basierend auf der Schnittlängeneingabeeinrichtung 72 oder einem selbsttätig ermittelten Wert) festgelegt werden. Im Einzelnen kann in der Steuerung eine Tabelle, ein Kennlinienfeld oder ein Algorithmus abgespeichert sein, um aus den drei Eingangsgrößen die Stellgröße für den elektromagnetischen Ventilzusammenbau 62 zu bestimmen. Die Steuerung 66 bestimmt die dem Ventilzusammenbau 62 zugeführten Signale in der Regel digital und setzt sie mittels eines Digital-Analogwandlers in Spannungswerte um, die den Proportionalventilen des Ventilzusammenbaus 62 zugeführt werden. Die Signale für den Ventilzusammenbau 62 werden somit ohne Erfassung der Drehzahl der Einzugswalzen 30 - 36 ermittelt. Die Steuerung 66 stellt die Drehzahl der Einzugswalzen 30 - 36 auf einen Wert ein, der zum Erreichen der gewünschten Schnittlänge führt, ohne ein Rückkopplungssignal zu verwenden. Wenn die Drehzahlen des Verbrennungsmotors 38 und der Häckseltrommel 22 absinken, beispielsweise bei einer übermäßigen Gutzufuhr, erfasst die Steuerung 66 dieses Absinken anhand der Signale der Sensoren 68, 70 und veranlasst, dass die Drehzahl des hydrostatischen Antriebsmotors 54 entsprechend abgesenkt wird, so dass die Schnittlänge zumindest näherungsweise konstant bleibt. Steigen die Drehzahlen der Häckseltrommel 22 und des Verbrennungsmotors 38 anschließend wieder an, veranlasst die Steuerung 66 analog ein Anheben der Drehzahl des hydrostatischen Antriebsmotors 54.

Beim Reversieren wird die Drehzahl des Antriebsmotors 54 auf einen vorgegebenen Wert eingestellt. Dabei berücksichtigt die Steuerung 66 ebenfalls die durch den Verbrennungsmotordrehzahlsensor 70 erfasste Drehzahl des Verbrennungsmotors 38.

Die Drehzahlen der Häckseltrommel 22 und des Verbrennungsmotors 38 weisen ein konstantes Verhältnis auf, welches durch die Übersetzung des Antriebes mit dem Riemen 44 definiert ist. Dieses Verhältnis ist, da sich in der Regel kein Schlupf bemerkbar macht, konstant. Es wäre daher denkbar, auf das Signal eines der Sensoren 68, 70 zu verzichten. Dazu kann ab Werk nur einer der Sensoren 68, 70 eingebaut werden, während der Steuerung 66 eine Information über das Übersetzungsverhältnis einprogrammiert wird bzw. sie a priori eingerichtet ist, den Ventilzusammenbau 62 nur anhand des Signals des verbleibenden Sensors anzusteuern. Für den Fall, dass einer der Sensoren 68, 70 versagt, ist es aber sinnvoll, dass die Steuerung 66 selbsttätig das Drehzahlverhältnis von Verbrennungsmotor 38 und Häckseltrommel 22 erlernt, so dass sie beide Drehzahlen aus dem Messwert nur eines der Sensoren 68, 70 ableiten kann. Dazu kann die Steuerung 66 zu bestimmten Zeitpunkten, beispielsweise beim ersten Betrieb oder nach bestimmten Zeitintervallen, das Drehzahlverhältnis der beiden Sensoren 68, 70 erfassen. Eine Information über das Drehzahlverhältnis wird abgespeichert. Falls einer der Sensoren 68, 70 später versagt, was anhand eines fehlenden oder offensichtlich unkorrekten Signals (z. B. übermäßige Abweichung von einem möglichen Drehzahlbereich) erkennbar ist, leitet die Steuerung aus dem Signal des verbleibenden Sensors die Drehzahl des ausgefallenen Sensors ab.

Anzumerken ist, dass die Steuerung 66 unabhängig von der Verwendung des Planetengetriebes im Schnittlängengetriebe 52 ist. Es wäre somit auch denkbar, die Einzugswalzen 30 - 36 ausschließlich durch den hydrostatischen Antriebsmotor 54 anzutreiben. Außerdem könnte ein weiterer Sensor der Steuerung 66 eine Information über die Drehzahl der Einzugswalzen 30 - 36 zuführen. Diese Information kann beispielsweise im Falle eines Versagens beider Sensoren 68, 70 zur Regelung der Drehzahl der Einzugswalzen 30 - 36 dienen.

## Patentansprüche

1. Erntemaschine (10) mit einer Zuführeinrichtung, die betreibbar ist, einer Gutbearbeitungseinrichtung Erntegut zuzuführen, und mit einer Steuerung (66), die eingerichtet ist, basierend auf der erfassten Drehzahl der Gutbearbeitungseinrichtung bzw. Zuführeinrichtung eine Stellgröße zu erzeugen, die bei einer Abweichung des Verhältnisses zwischen der Drehzahl der Zuführeinrichtung und der Drehzahl der Gutbearbeitungseinrichtung von einem Solldrehzahlverhältnis bewirkt, dass die Differenz zwischen dem Soll- und dem Istdrehzahlverhältnis zumindest verringert wird, **dadurch gekennzeichnet, dass** die Steuerung (66) mit mehreren Sensoren (68, 70) verbunden ist, die jeweils beide zur Erfassung der Drehzahl der Zuführeinrichtung oder jeweils beide zur Erfassung der Drehzahl der Gutbearbeitungseinrichtung eingerichtet sind, und dass die Steuerung (66) betreibbar ist, das Drehzahlverhältnis der von beiden Sensoren (68, 70) erfassten Drehzahlen zu erfassen und abzuspeichern und bei Versagen eines der Sensoren (68, 70) auf den verbleibenden Sensor (70, 68) zurückzugreifen.

2. Erntemaschine (10) nach Anspruch 1, **dadurch gekennzeichnet, dass** die Gutbearbeitungseinrichtung eine Häckseltrommel (22) ist, und dass die Zuführeinrichtung Einzugswalzen (30-36) aufweist, wobei die Steuerung (66) die Drehzahl der Einzugswalzen (30-36) derart einstellt, dass ein Sollwert für die Schnittlänge erzielt wird.

3. Erntemaschine (10) nach Anspruch 1 oder 2, **dadurch gekennzeichnet, dass** die Steuerung (66) betreibbar ist, die Stellgröße unabhängig von einer Erfassung der Geschwindigkeit der Zuführeinrichtung oder der Gutbearbeitungseinrichtung zu erzeugen.

4. Erntemaschine (10) nach Anspruch 3, **dadurch gekennzeichnet, dass** die Steuerung (66) betreibbar ist, anhand der erfassten Drehzahl der Gutbearbeitungseinrichtung oder der Zuführeinrichtung und des Sollwerts des Verhältnisses zwischen der Drehzahl der Zuführeinrichtung und der Drehzahl der Gutbearbeitungseinrichtung eine Stellgröße für die Zuführeinrichtung oder die Gutbearbeitungseinrichtung zu ermitteln.

5. Erntemaschine (10) nach Anspruch 4, **dadurch gekennzeichnet, dass** die Steuerung (66) betreibbar ist, die Stellgröße mittels einer Tabelle und/oder eines Algorithmus zu ermitteln.

6. Erntemaschine (10) nach einem der Ansprüche 1 bis 5, **dadurch gekennzeichnet, dass** die Steuerung (66) betreibbar ist, eine Stellgröße für die Zuführeinrichtung oder die Gutbearbeitungseinrichtung weiterhin basierend auf einer gemessenen Drehzahl, mit der eine Pumpe (56) angetrieben wird, die einen hydrostatischen Antriebsmotor (54) der Zuführeinrichtung oder der Gutbearbeitungseinrichtung mit unter Druck stehendem Hydraulikfluid versorgt, zu ermitteln.

7. Erntemaschine (10) nach Anspruch 6, **dadurch gekennzeichnet, dass** der Antriebsmotor (54) die Zuführeinrichtung oder die Gutbearbeitungseinrichtung direkt oder über ein Getriebe mit fester oder umschaltbarer Übersetzung oder über ein Planetengetriebe, das weiterhin ein mechanisch durch einen Verbrennungsmotor (38) angetriebenes Element umfasst, antreibt.

8. Erntemaschine (10) nach Anspruch 6 oder 7, **dadurch gekennzeichnet, dass** die Drehzahl, mit der die Pumpe (56) angetrieben wird, mittels eines Verbrennungsmotordrehzahlsensors (70) erfasst wird, der die Drehzahl eines Verbrennungsmotors (38) misst, der mit der Pumpe (56) in Antriebsverbindung steht.

9. Erntemaschine (10) nach einem der Ansprüche 1 bis 8, **dadurch gekennzeichnet, dass** die Drehzahl der Gutbearbeitungseinrichtung oder der Zuführeinrichtung durch einen Sensor (68) erfassbar ist, der die Drehzahl der Gutbearbeitungseinrichtung oder der Zuführeinrichtung direkt erfasst.

10. Erntemaschine (10) nach einem der Ansprüche 1 bis 9, **dadurch gekennzeichnet, dass** die Drehzahl der Gutbearbeitungseinrichtung oder der Zuführeinrichtung durch einen Sensor (70) erfassbar ist, der die Drehzahl eines in Antriebsverbindung mit der Gutbearbeitungseinrichtung oder der Zuführeinrichtung stehenden Elements erfasst.

11. Erntemaschine (10) nach einem der Ansprüche 1 bis 10, **dadurch gekennzeichnet, dass** die Steuerung (66) mit einem Sensor (68), der die Drehzahl der Gutbearbeitungseinrichtung direkt erfasst, und mit einem Sensor (70) verbunden ist, der die Drehzahl eines in Antriebsverbindung mit der Gutbearbeitungseinrichtung stehenden Elements erfasst.

## Claims

1. Harvesting machine (10) with a feeding device which is operable in order to feed harvested crop to a crop processing device, and with a controller (66) which is configured, on the basis of the detected rotational speed of the crop processing device and feeding device, to generate an actuating variable which, upon a deviation of the ratio between the rotational speed of the feeding device and the rotational speed of the crop processing device from a desired rotational speed ratio, causes the difference between the desired and the actual rotational speed ratio to be at least reduced, **characterized in that** the controller (66) is connected to a plurality of sensors (68, 70) which are in each case both configured for detecting the rotational speed of the feeding device or are in each case both configured for detecting the rotational speed of the crop processing device, and **in that** the controller (66) is operable to detect and to store the rotational speed ratio of the rotational speeds detected by the two sensors (68, 70) and, in the event of failure of one of the sensors (68, 70), to make recourse to the remaining sensor (70, 68).

2. Harvesting machine (10) according to Claim 1, **characterized in that** the crop processing device is a chopping drum (22), and **in that** the feeding device has intake rollers (30-36), wherein the controller (66) sets the rotational speed of the intake rollers (30-36) in such a manner that a desired value is obtained for the length of cut.

3. Harvesting machine (10) according to Claim 1 or 2, **characterized in that** the controller (66) is operable to generate the actuating variable independently of detecting the speed of the feeding device or of the crop processing device.

4. Harvesting machine (10) according to Claim 3, **characterized in that** the controller (66) is operable to determine an actuating variable for the feeding device or the crop processing device with reference to the detected rotational speed of the crop processing device or of the feeding device and to the desired value of the ratio between the rotational speed of the feeding device and the rotational speed of the crop processing device.

5. Harvesting machine (10) according to Claim 4, **characterized in that** the controller (66) is operable to determine the actuating variable by means of a table and/or an algorithm.

6. Harvesting machine (10) according to one of Claims 1 to 5, **characterized in that** the controller (66) is operable furthermore to determine an actuating variable for the feeding device or the crop processing device on the basis of a measured rotational speed at which a pump (56) is driven, the pump supplying a hydrostatic driving motor (54) of the feeding device or of the crop processing device with pressurized hydraulic fluid.

7. Harvesting machine (10) according to Claim 6, **characterized in that** the driving motor (54) drives the feeding device or the crop processing device directly or via a gearing with a fixed or switchable transmission ratio or via a planetary gearing which furthermore comprises an element driven mechanically by an internal combustion engine (38).

8. Harvesting machine (10) according to Claim 6 or 7, **characterized in that** the rotational speed at which the pump (56) is driven is detected by means of a rotational speed sensor (70) of the internal combustion engine, which sensor measures the rotational speed of an internal combustion engine (38) which is connected in terms of drive to the pump (56).

9. Harvesting machine (10) according to one of Claims 1 to 8, **characterized in that** the rotational speed of the crop processing device or of the feeding device is detectable by a sensor (68) which directly detects the rotational speed of the crop processing device or of the feeding device.

10. Harvesting machine (10) according to one of Claims 1 to 9, **characterized in that** the rotational speed of the crop processing device or of the feeding device is detectable by a sensor (70) which detects the rotational speed of an element which is connected in terms of drive to the crop processing device or to the feeding device.

11. Harvesting machine (10) according to one of Claims 1 to 10, **characterized in that** the controller (66) is connected to a sensor (68) which directly detects the rotational speed of the crop processing device and to a sensor (70) which detects the rotational speed of an element which is connected in terms of drive to the crop processing device.

## Revendications

1. Machine de récolte (10) comprenant un dispositif d'alimentation, qui peut fonctionner pour acheminer un produit de récolte à un dispositif de traitement de produit, et comprenant une commande (66) qui est prévue, sur la base de la vitesse de rotation détectée du dispositif de traitement de produit ou du dispositif d'alimentation, pour produire une grandeur de réglage qui fait en sorte, en cas d'écart du rapport entre la vitesse de rotation du dispositif d'alimentation et la vitesse de rotation du dispositif de traitement de produit par rapport à un rapport de vitesse de rotation de consigne, que la différence entre le rapport de vitesse de rotation de consigne et le rapport de vitesse de rotation instantané soit au moins réduite, **caractérisée en ce que** la commande (66) est connectée à plusieurs capteurs (68, 70) qui sont tous deux à chaque fois prévus pour détecter la vitesse de rotation du dispositif d'alimentation ou à chaque fois tous deux prévus pour détecter la vitesse de rotation du dispositif de traitement de produit, et **en ce que** la commande (66) peut fonctionner de manière à détecter le rapport de vitesse de rotation des vitesses de rotation détectées par les deux capteurs (68, 70) et à le mémoriser et en cas de défaillance de l'un des capteurs (68, 70), à faire appel au capteur restant (70, 68).

2. Machine de récolte (10) selon la revendication 1, **caractérisée en ce que** le dispositif de traitement de produit est un rotor hacheur (22) et **en ce que** le dispositif d'alimentation présente des rouleaux individuels (30-36), la commande (66) ajustant la vitesse de rotation des rouleaux individuels (30-36) de telle sorte qu'une valeur de consigne soit produite pour la longueur de coupe.

3. Machine de récolte (10) selon la revendication 1 ou 2, **caractérisée en ce que** la commande (66) peut fonctionner de manière à produire la grandeur de réglage indépendamment d'une détection de la vitesse du dispositif d'alimentation ou du dispositif de traitement de produit.

4. Machine de récolte (10) selon la revendication 3, **caractérisée en ce que** la commande (66) peut fonctionner pour déterminer, à l'aide de la vitesse de rotation détectée du dispositif de traitement de produit ou du dispositif d'alimentation et de la valeur de consigne du rapport entre la vitesse de rotation du dispositif d'alimentation et la vitesse de rotation du dispositif de traitement de produit, une grandeur de réglage pour le dispositif d'alimentation ou le dispositif de traitement de produit.

5. Machine de récolte (10) selon la revendication 4, **caractérisée en ce que** la commande (66) peut fonctionner de manière à déterminer la grandeur de réglage au moyen d'un tableau et/ou d'un algorithme.

6. Machine de récolte (10) selon l'une quelconque des revendications 1 à 5, **caractérisée en ce que** la commande (66) peut fonctionner de manière à déterminer une grandeur de réglage pour le dispositif d'alimentation ou le dispositif de traitement de produit en outre sur la base d'une vitesse de rotation mesurée, avec laquelle une pompe (56) est entraînée, laquelle alimente un moteur d'entraînement hydrostatique (54) du dispositif d'alimentation ou du dispositif de traitement de produit avec un fluide hydraulique sous pression.

7. Machine de récolte (10) selon la revendication 6, **caractérisée en ce que** le moteur d'entraînement (54) entraîne le dispositif d'alimentation ou le dispositif de traitement de produit directement ou par le biais d'une transmission à réduction fixe ou commutable ou par le biais d'une transmission planétaire, qui comprend en outre un élément entraîné mécaniquement par un moteur à combustion interne (38).

8. Machine de récolte (10) selon la revendication 6 ou 7, **caractérisée en ce que** la vitesse de rotation avec laquelle la pompe (56) est entraînée est détectée au moyen d'un capteur de vitesse de rotation du moteur à combustion interne (70), qui mesure la vitesse de rotation de moteur à combustion interne (38) qui est en liaison d'entraînement avec la pompe (56).

9. Machine de récolte (10) selon l'une quelconque des revendications 1 à 8, **caractérisée en ce que** la vitesse de rotation du dispositif de traitement de produit ou du dispositif d'alimentation peut être détectée par un capteur (68) qui détecte directement la vitesse de rotation du dispositif de traitement de produit ou du dispositif d'alimentation.

10. Machine de récolte (10) selon l'une quelconque des revendications 1 à 9, **caractérisée en ce que** la vitesse de rotation du dispositif de traitement de produit ou du dispositif d'alimentation peut être détectée par un capteur (70) qui détecte la vitesse de rotation d'un élément en liaison d'entraînement avec le dispositif de traitement de produit ou le dispositif d'alimentation.

11. Machine de récolte (10) selon l'une quelconque des revendications 1 à 10, **caractérisée en ce que** la commande (66) est connectée à un capteur (68) qui détecte directement la vitesse de rotation du dispositif de traitement de produit, et à un capteur (70) qui détecte la vitesse de rotation d'un élément en liaison d'entraînement avec le dispositif de traitement de produit.
